Europäisches Patentamt

European Patent Office

Office européen des brevets

(19)

(11) EP 1 519 022 A1

(12) DEMANDE DE BREVET EUROPEEN

(43) Date de publication:
30.03.2005 Bulletin 2005/13

(51) Int Cl.$^7$: F02D 41/02, F01N 11/00

(21) Numéro de dépôt: 04300612.1

(22) Date de dépôt: 17.09.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 23.09.2003 FR 0350595

(71) Demandeur: Peugeot Citroen Automobiles SA
78140 Vélizy Villacoublay (FR)

(72) Inventeur: Audoin, Arnaud
75003 Paris (FR)

(74) Mandataire: Grynwald, Albert et al
Cabinet Grynwald
94, rue Saint Lazare
75009 Paris (FR)

(54) **Procédé et dispositif de détermination de la température interne d'un catalyseur de véhicule muni d'un moteur thermique**

(57) L'invention concerne un procédé de détermination de la température interne d'un catalyseur de véhicule muni d'un moteur thermique.

Conformément à l'invention, un tel procédé est caractérisé en ce qu'on détermine cette température en calculant la moyenne (202) de mesures (204) de température des gaz d'échappement effectuées avant l'admission de ces gaz dans le catalyseur sur une période de temps limitée, ces mesures étant pondérées par une variable (206) fonction de l'activité d'oxydation effectuée par le catalyseur.

# FIG.2

Mode moteur

Modèle exotherme

Modèle inertie thermique

EP 1 519 022 A1

**Description**

La présente invention se rapporte à un procédé et à un dispositif de détermination de la température interne d'un catalyseur de véhicule muni d'un moteur thermique.

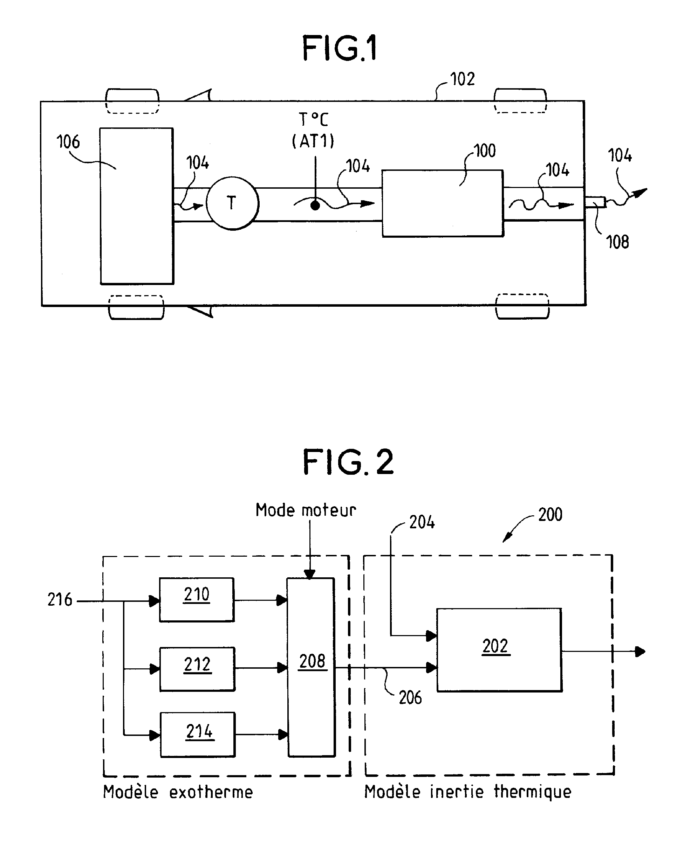

Un catalyseur 100 (figure 1) est utilisé dans un véhicule 102 pour améliorer la qualité des gaz 104 d'échappement issus du moteur 106 de ce véhicule.

Pour cela, ce catalyseur 100 reçoit les gaz 104 émis par le moteur 106 du véhicule 102 afin de les traiter au moyen, notamment, de pièges à oxydes d'azote (NOx) ou de filtres à particules visant à éliminer ces dernières.

Dans certains cas, comme représenté sur la figure 1, ce catalyseur 100 peut être situé à la sortie d'un turbocompresseur T équipant ce véhicule 102 lorsque le véhicule est équipé d'un tel turbocompresseur.

Toutefois, lorsqu'un tel turbocompresseur n'est pas présent, le catalyseur reçoit directement les gaz d'échappement du moteur.

Par la suite, les gaz 104 d'échappement sont transmis vers le tuyau 108 d'échappement du véhicule 102 d'où ils peuvent être émis dans l'environnement avec un taux de polluants réduit.

Par ailleurs, il est connu que le fonctionnement d'un catalyseur 100 dépend de la température interne de ce catalyseur, notamment lorsque ce dernier sert à traiter les oxydes d'azote (NOx).

De fait, le rendement d'un catalyseur est intimement lié à la température interne de ce dernier, et notamment de la partie interne de ce catalyseur, aussi dénommée piège, utilisée pour interagir avec des polluants et les éliminer.

Cependant, la détermination de la température de ce matériau est problématique étant donné qu'il atteint des températures élevées, rendant l'environnement difficile pour une sonde.

En outre, l'installation d'une sonde thermique à l'intérieur du catalyseur est complexe et coûteuse.

L'invention vise à fournir un procédé et un dispositif permettant de déterminer la température interne d'un catalyseur résolvant les problèmes précédemment mentionnés. Elle résulte de la constatation que la température d'un catalyseur est pratiquement déterminée par deux phénomènes thermiques, à savoir :

- Une inertie thermique au chauffage, c'est-à-dire un échauffement progressif du catalyseur, tendant vers la température des gaz d'échappement, dû au fait que le catalyseur est un solide dont la température croît sous l'effet des gaz d'échappement qui le traversent, et
- Un exotherme catalyseur, c'est-à-dire un échauffement du catalyseur dû à la libération d'énergie produite par les réactions d'oxydations de particules dans le catalyseur.

Tel est le cas, notamment, lorsque des composés tels que des monoxydes de carbone (CO) et des hydrocarbures (HC) s'oxydent au contact du catalyseur.

C'est pourquoi, la présente invention concerne un procédé de détermination de la température interne d'un catalyseur de véhicule muni d'un moteur thermique caractérisé en ce qu'on détermine cette température en calculant la moyenne de mesures de température de gaz d'échappement de ce moteur effectuées avant l'admission de ces gaz dans le catalyseur sur une période de temps limitée, ces mesures étant pondérées par une variable fonction de l'activité d'oxydation effectuée par le catalyseur.

En considérant la moyenne de mesures de températures des gaz d'échappement avant leur admission dans le catalyseur et sur une période de temps limitée, on simule l'inertie de la montée en température du catalyseur sous l'effet de ces gaz d'échappement.

En effet, les gaz d'échappement ayant une température croissante sous l'effet de l'échauffement du dispositif moteur, la moyenne des mesures de températures des gaz d'échappement sur une durée limitée a une valeur inférieure à la valeur de la température des gaz d'échappement à l'entrée du catalyseur à la fin de cette durée.

Ainsi, au moyen d'une opération simple requérant des éléments de calculs peu coûteux, on reproduit le phénomène d'inertie du catalyseur.

Par ailleurs en pondérant chaque mesure par une variable fonction de l'activité d'oxydation effectuée par le catalyseur, on simule le phénomène d'exotherme catalyseur tel que précédemment décrit de façon aussi simple et peu coûteuse.

En outre, le procédé conforme à l'invention présente l'avantage de ne pas requérir de sonde de température à l'intérieure du catalyseur, ce qui réduit la complexité et le coût du dispositif de détermination de la température dans le catalyseur.

Dans une réalisation, on pondère chaque mesure de température en lui ajoutant une variable fonction de l'activité d'oxydation effectuée par le catalyseur.

Selon une réalisation, cette variable est déterminée à partir de la quantité de carburant introduite dans le moteur.

Ainsi, cette variable peut être facilement déterminée puisque la quantité de carburant introduite dans le moteur est précisément connue, par exemple au moyen d'un processeur électronique.

Dans une réalisation, la variable est déterminée en fonction de trois modes d'exotherme catalyseur, chaque mode étant propre à une gamme de quantité de carburant injectée dans le moteur.

Selon une réalisation, on détermine la température interne du catalyseur au moyen d'une formule telle que :

$$T_{intracatalyseur} = \Sigma_{t=1:n} \, [AT_1 \, (t) + P \, (Q_{inj} \, (t)]/n \tag{1}$$

où n est représentatif du nombre de mesures considérées, $AT_1(t)$ est une mesure de température des gaz d'échappement à l'instant t compris dans la durée de mesures définie par le nombre n de mesures et leur fréquence (par exemple de 1 Hz) et $P(Q_{inj}(t)$ est une variable ajoutée à la mesure $AT_1(t)$ pour la pondérer en accord avec l'activité d'oxydation du catalyseur, ou avec le phénomène d'exotherme catalyseur.

Ainsi, au moyen d'une formule simple, on peut déterminer la température interne du catalyseur en simulant les deux phénomènes thermiques qui, pratiquement, régulent la température du catalyseur.

Dans une réalisation, on effectue un nombre de mesures de températures de l'ordre de 20, les mesures étant effectuées avec une fréquence de répétition de 1Hz par exemple.

L'invention concerne aussi un dispositif de détermination de la température interne d'un catalyseur de véhicule muni d'un moteur thermique, un tel dispositif étant caractérisé en ce qu'il comprend des moyens, tels qu'un processeur, pour déterminer cette température selon une des réalisations de l'invention.

D'autres caractéristiques et avantages de l'invention apparaîtront avec la description effectuée ci-dessous, à titre illustratif et non limitatif, en faisant référence aux figures ci-jointes sur lesquelles :

la figure 1, déjà décrite, est un schéma d'un véhicule muni d'un moteur thermique et d'un catalyseur des gaz d'échappement de ce moteur,
la figure 2 est un schéma des opérations effectuées par un processeur conforme à l'invention, et
les figures 3a et 3b représentent des comparaisons de températures mesurées et déterminées dans un catalyseur conformément à l'invention.

Dans le mode de réalisation de l'invention décrit ci-dessous, le procédé conforme à l'invention est mis en oeuvre dans un processeur 200 qui, pour ce faire, comprend des moyens 202 déterminant la moyenne de mesures 204 de températures des gaz d'échappement du moteur, ces mesures étant effectuées avant l'admission de ces gaz dans le catalyseur sur une durée de temps limitée de telle sorte que, lorsqu'une nouvelle mesure de température est pris en compte, la plus ancienne mesure de température ne soit plus considérée dans le calcul de la moyenne.

Ainsi, en considérant que la température du catalyseur peut être obtenue au moyen du calcul d'une telle moyenne glissante, le phénomène d'inertie thermique subi par le catalyseur dans son échauffement par les gaz d'échappement est simulé.

De fait, le calcul d'une telle moyenne, dénommée aussi moyenne glissante , entraîne que la température du catalyseur déterminée soit théoriquement inférieure à la dernière température mesurée lorsque les températures mesurées sont croissantes, suite à l'échauffement progressif du dispositif moteur.

On retrouve alors le fait que, dans ce cas, la température du catalyseur est inférieure, lorsque le phénomène d'inertie thermique est uniquement considéré, à celle des gaz d'échappement.

Cependant, il est possible qu'une baisse de la température des gaz d'échappement entraîne que la température dans le catalyseur soit supérieure à la température des gaz d'échappement.

Dans ce cas, le calcul d'une moyenne glissante à partir des températures de gaz d'échappement entraîne que la température du catalyseur déterminée soit théoriquement supérieure à la dernière température mesurée lorsque ces températures mesurées sont décroissantes, ce qui reproduit donc à nouveau le phénomène d'inertie du catalyseur.

Toutefois, comme précédemment décrit, le phénomène d'exotherme catalyseur, c'est-à-dire l'échauffement dû aux réactions d'oxydations, doit aussi être pris en compte.

Pratiquement, une telle prise en compte est obtenue, dans ce mode de réalisation, en pondérant la mesure de température par l'ajout d'une constante 206 afin que la moyenne glissante soit calculée en considérant des mesures de température ainsi pondérées.

Une telle considération peut être mise en oeuvre en utilisant une formule telle que :

$$T_{intracatalyseur} = \Sigma_{t=1:} \, [AT_1 \, (t) + P \, (Q_{inj} \, (t)]/n \tag{1}$$

où n est représentatif du nombre de mesures considérées, par exemple égal à 20, $AT_1(t)$ est une mesure de température des gaz d'échappement à l'instant t compris dans la durée de mesures définie par le nombre n de mesures et leur fréquence de répétition(par exemple 1Hz).

Par ailleurs, $P(Q_{inj}(t)$ est la constante 206 ajoutée à la mesure $AT_1(t)$ pour la pondérer en accord avec le phénomène d'exotherme catalyseur.

Dans ce mode de réalisation préféré, la constante 206 est déterminée en considérant trois modes d'exothermes catalyseurs, à savoir :

-  un exotherme pauvre, qui correspond à un fonctionnement normal d'un moteur diesel dans lequel un excès d'oxygène est présent dans les gaz d'échappement.
-  un exotherme chauffage, qui correspond à un mode de fonctionnement moteur permettant d'élever la température des gaz d'échappement, par exemple pour la régénération d'un filtre à particules ou la désulfatation d'un piège à oxydes d'azote (NOx), et qui présente un important exotherme pendant quelques minutes, et
-  un exotherme riche, qui correspond à un mode de fonctionnement moteur permettant la réduction des oxydes d'azote (NOx) et qui présente un très fort exotherme pendant quelques secondes.

Dans cette réalisation, pour chacun des trois modes de fonctionnement moteur cités, ces différents exothermes sont identifiés uniquement en fonction de la quantité de carburant 216 introduite dans le moteur de telle sorte qu'un exotherme pauvre correspond à une faible quantité de carburant introduite tandis que l'exotherme chauffage, puis l'exotherme riche correspondent respectivement à des quantités croissantes de carburant injectés.

De fait, l'activité d'oxydation du catalyseur est d'autant plus importante que la quantité de polluants traités est élevée. Or cette quantité étant d'autant plus importante que la quantité de carburant injectée est grande.

C'est pourquoi, le processeur 200 comprend des moyens 210, 212 et 214 pour, respectivement, considérer un exotherme pauvre, chauffage ou riche à partir de la quantité 216 de carburant admise dans le moteur.

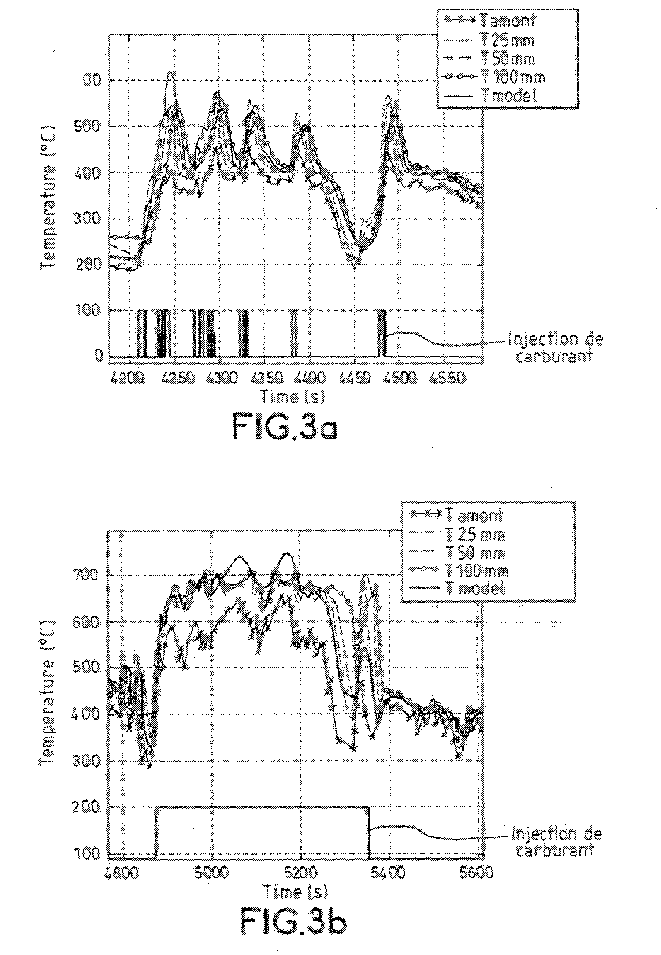

Des déterminations de températures selon un procédé conforme à l'invention ont été réalisées empiriquement pour un mode exotherme riche (figure 3a) ou chauffage (figure 3b), comme montré sur les figures 3a et 3b, et comparées à des mesures effectuées au moyen de sondes thermocouples implantées en amont du catalyseur (Tamon) puis dans ce catalyseur, à une distance variable du parcours du gaz dans ce dernier, à savoir à 25 mm (T25mm), à 50 mm (T50mm) et à 100 mm (T100mm) pour une longueur totale du catalyseur de 150 mm.

Ces figures permettent de vérifier que les déterminations de températures Tmodel selon un procédé conforme à l'invention correspondent de façon satisfaisante à la température dans le catalyseur.

**Revendications**

1.  Procédé de détermination de la température interne d'un catalyseur de véhicule muni d'un moteur thermique **caractérisé en ce qu'**on détermine cette température en calculant la moyenne (202) de mesures (204) de température des gaz d'échappement effectuées avant l'admission de ces gaz dans le catalyseur sur une période de temps limitée, ces mesures étant pondérées par une variable (206) fonction de l'activité d'oxydation effectuée par le catalyseur.

2.  Procédé selon la revendication 1 **caractérisé en ce qu'**on pondère chaque mesure de température (204) en lui ajoutant une variable (206) fonction de l'activité d'oxydation effectuée par le catalyseur.

3.  Procédé selon la revendication 2 **caractérisé en ce que** la variable (206) est déterminée à partir de la quantité (216) de carburant introduite dans le moteur.

4.  Procédé selon l'une des revendications 2 ou 3, **caractérisé en ce que** la variable (206) est déterminée en fonction de trois modes d'exotherme catalyseur (210, 212, 214), chaque mode étant propre à une gamme de quantité de carburant injectée dans le moteur.

5.  Procédé selon la revendication 1, 2, 3 ou 4 **caractérisé en ce qu'**on détermine la température interne du catalyseur au moyen d'une formule telle que :

$$T_{intracatalyseur} = \Sigma_{t=1:n} [AT_1(t) + P(Q_{inj}(t)]/n \qquad\qquad (1)$$

où n est représentatif du nombre de mesures considérées, $AT_1(t)$ est une mesure de température des gaz d'échappement à l'instant t compris dans la durée de mesures définie par le nombre n de mesures et leur fréquence (par exemple 1Hz) et $P(Q_{inj}(t)$ est une variable ajoutée à la mesure $AT_1(t)$ pour la pondérer en accord avec l'activité d'oxydation du catalyseur, ou avec le phénomène d'exotherme catalyseur.

**6.** Procédé selon l'une des revendications précédentes **caractérisé en ce qu'**on effectue un nombre de mesures de températures de l'ordre de 20, les mesures étant effectuées avec une fréquence de répétition de 1Hz par exemple.

**7.** Dispositif de détermination de la température interne d'un catalyseur de véhicule muni d'un moteur thermique **caractérisé en ce qu'**il comprend des moyens, tels qu'un processeur, pour déterminer cette température selon le procédé conforme à l'une des revendications précédentes.

# FIG.1

T °C
(AT1)

106 104 104 100 104 104

102

108

# FIG.2

Mode moteur

204 200

216 → 210 → 208 → 202 →

212

214

206

Modèle exotherme

Modèle inertie thermique

FIG.3a

FIG.3b

**Office européen des brevets**

**RAPPORT DE RECHERCHE EUROPEENNE**

Numéro de la demande

EP 04 30 0612

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 198 36 955 A (SIEMENS AG) 9 mars 2000 (2000-03-09) * page 3, ligne 7 - ligne 9 * * page 3, ligne 20 - page 4, ligne 10 * * figure 1 * | 1-7 | F02D41/02 F01N11/00 |
| X | US 5 158 063 A (ITO HIROSHI ET AL) 27 octobre 1992 (1992-10-27) * colonne 7, ligne 59 - colonne 9, ligne 11 * | 1,7 | |
| X | DE 101 08 182 A (BOSCH GMBH ROBERT) 29 août 2002 (2002-08-29) * alinéa [0018] * * alinéa [0027] - alinéa [0031] * | 1,7 | |
| X | FR 2 834 752 A (SIEMENS AG) 18 juillet 2003 (2003-07-18) * page 2, ligne 4 - page 4, ligne 33 * | 1,7 | |
| A | DE 199 61 164 A (VOLKSWAGENWERK AG) 21 juin 2001 (2001-06-21) * le document en entier * | 1-7 | DOMAINES TECHNIQUES RECHERCHES (Int.Cl.7) F01N F02D |
| A | DE 199 07 382 A (BAYERISCHE MOTOREN WERKE AG) 24 août 2000 (2000-08-24) * le document en entier * | 1-7 | |
| A | EP 1 061 241 A (RENAULT) 20 décembre 2000 (2000-12-20) * le document en entier * | 1-7 | |

Le présent rapport a été établi pour toutes les revendications

| Lieu de la recherche | Date d'achèvement de la recherche | Examinateur |
|---|---|---|
| La Haye | 3 décembre 2004 | Libeaut, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 1 519 022 A1**

## ANNEXE AU RAPPORT DE RECHERCHE EUROPEENNE
## RELATIF A LA DEMANDE DE BREVET EUROPEEN NO.

EP 04 30 0612

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-12-2004

| Document brevet cité au rapport de recherche | | Date de publication | Membre(s) de la famille de brevet(s) | | Date de publication |
|---|---|---|---|---|---|
| DE 19836955 | A | 09-03-2000 | DE | 19836955 A1 | 09-03-2000 |
| | | | WO | 0009870 A1 | 24-02-2000 |
| | | | DE | 59904980 D1 | 15-05-2003 |
| | | | EP | 1108124 A1 | 20-06-2001 |
| US 5158063 | A | 27-10-1992 | JP | 4234542 A | 24-08-1992 |
| | | | DE | 4142328 A1 | 02-07-1992 |
| DE 10108182 | A | 29-08-2002 | DE | 10108182 A1 | 29-08-2002 |
| | | | WO | 02066803 A1 | 29-08-2002 |
| | | | EP | 1364111 A1 | 26-11-2003 |
| | | | JP | 2004518848 T | 24-06-2004 |
| FR 2834752 | A | 18-07-2003 | DE | 10201329 A1 | 07-08-2003 |
| | | | FR | 2834752 A1 | 18-07-2003 |
| DE 19961164 | A | 21-06-2001 | DE | 19961164 A1 | 21-06-2001 |
| | | | AU | 2839901 A | 25-06-2001 |
| | | | CN | 1409801 T | 09-04-2003 |
| | | | WO | 0144629 A2 | 21-06-2001 |
| | | | EP | 1242724 A2 | 25-09-2002 |
| DE 19907382 | A | 24-08-2000 | DE | 19907382 A1 | 24-08-2000 |
| EP 1061241 | A | 20-12-2000 | FR | 2795131 A1 | 22-12-2000 |
| | | | EP | 1061241 A1 | 20-12-2000 |

EPO FORM P0460

Pour tout renseignement concernant cette annexe : voir Journal Officiel de l'Office européen des brevets, No.12/82

9